## Europäisches Patentamt

## European Patent Office

## Office européen des brevets

(19)

(11) Veröffentlichungsnummer : **0 216 277**
**B1**

(12) **EUROPÄISCHE PATENTSCHRIFT**

(45) Veröffentlichungstag der Patentschrift :
**23.11.89**

(51) Int. Cl.⁴ : **F 16 D 51/26**

(21) Anmeldenummer : **86112666.2**

(22) Anmeldetag : **12.09.86**

(54) **Trommelbremse mit geringer Empfindlichkeit.**

(30) Priorität : **25.09.85 DE 8527385 U**

(43) Veröffentlichungstag der Anmeldung :
**01.04.87 Patentblatt 87/14**

(45) Bekanntmachung des Hinweises auf die Patenterteilung : **23.11.89 Patentblatt 89/47**

(84) Benannte Vertragsstaaten :
**DE FR GB IT**

(56) Entgegenhaltungen :
**DE--B-- 2 825 895**
**DE--C-- 678 617**
**FR--A-- 695 769**
**US--A-- 2 206 604**
**US--A-- 2 400 043**

(73) Patentinhaber : **LUCAS INDUSTRIES public limited company**
**Great King Street**
**Birmingham, B19 2XF West Midlands (GB)**

(72) Erfinder : **Heibel, Helmut**
**Wiesenstrasse 1**
**D-5431 Mischheim (DE)**

(74) Vertreter : **Wuesthoff, Franz, Dr.-Ing. et al**
**Patentanwälte Wuesthoff -v. Pechmann-Behrens-Goetz Schweigerstrasse 2**
**D-8000 München 90 (DE)**

EP 0 216 277 B1

## Beschreibung

Die Erfindung betrifft eine Trommelbremse mit den Merkmalen des Oberbegriffes des Patentanspruches 1 (vgl. DE-C-678.617).

Die Bremsung eines Fahrzeuges ist durch die Größe des Reibwertes zwischen den Reifen und der Straße begrenzt. Um bei kritischen Bremsungen diesen physikalisch vorgegebenen Grenzwert möglichst weitgehend auszuschöpfen, sollte eine hydraulische Bremsanlage derart ausgelegt sein, daß der Pedaldruck und gegebenenfalls die Bremskraftverstärkung derart umgesetzt werden, daß die auf die Bremsbacken wirkende Spannkraft ein Bremsmoment erzeugt, welches sich dem Bereich der Grenzhaftung zwischen Reifen und Straße nähert.

Das momentan wirksame Bremsmoment ist eine komplizierte Funktion nicht nur der hydraulisch (und gegebenenfalls mit einem Bremskraftverstärker) erzeugten Spannkraft, sondern hängt auch von anderen Parametern ab, wie den geometrischen Abmessungen der Reibflächen, die sich u. a. auch durch die Wärmeentwicklung während des Bremsens ändern, oder auch vom Reibwert (Reibungskoeffizienten) zwischen den Bremsbacken und der Bremstrommel.

Der Quotient aus der wirksamen Umfangskraft und der hydraulisch oder mechanisch erzeugten Spannkraft wird allgemein als Kennwert « C* » bezeichnet. Der so definierte Kennwert C* ist eine Funktion des genannten Reibwertes $\mu$ zwischen Bremsbacken und Trommel. Die Steigung dieser Funktion C* ($\mu$) wird als Empfindlichkeit $E_0$ bezeichnet. Es gilt also definitionsgemäß : $E_0 = dC/d\mu$.

Die Empfindlichkeit $E_0$ gibt die Änderung des Kennwertes mit dem Reibwert $\mu$ an. Ist der Kennwert eine steil ansteigende Funktion des Reibwertes $\mu$, so ergibt sich eine große Empfindlichkeit $E_0$ ; die Bremse spricht sehr « hart » an. Der Reibwert $\mu$ ist seinerseits unter anderem eine Funktion der Temperatur der Reibflächen.

Der Kennwert berechnet sich für symmetrische Bremsbacken in erster Näherung wie folgt :

$$C^* \text{ auflaufend} = (K_1 \times \mu)/(K_2 - \mu)$$

$$C^* \text{ ablaufend} = (K_1 \times \mu)/(K_2 + \mu)$$

$K_1$ und $K_2$ sind empirische Werte, die sich aus der Geometrie der Bremsbacken ableiten lassen und etwa als konstant anzusehen sind.

Aus den vorstehenden Gleichungen ergibt sich, daß der Kennwert C* einer auflaufenden Bremsbackenanordnung wesentlich größer ist als der Kennwert C* einer ablaufenden Bremsbackenanordnung.

Um bei Trommelbremsen ein hohes Bremsmoment bei geringer Spannkraft zu erzeugen, ist ein hoher Kennwert C* erforderlich, was allerdings auch eine hohe Empfindlichkeit $E_0$ bedingt. Diese hohe Empfindlichkeit ist aufgrund der mit ihr einhergehenden Härte im Ansprechverhalten der Bremse wenig erwünscht.

Neben der hydraulischen Bremsbetätigung ist üblicherweise noch eine mechanische Betätigung der Bremse mit einer Vorrichtung vorgesehen, die gewöhnlich als Handbremse oder allgemeiner als Feststell- oder Parkbremse bezeichnet wird, da sie selbstverständlich auch fußbetätigt sein kann. Aus Kostengründen sind Feststellbremsen in der Regel ohne Hilfskraft-Aggregate ausgelegt. Die vom Fahrer aufgebrachte Muskelkraft soll ausreichend sein, um die erforderliche Bremswirkung einzuleiten.

Während also bei einer hydraulischen Bremsung in der Regel geringe Kennwertschwankungen (Empfindlichkeiten) erwünscht sind, ist umgekehrt hinsichtlich der mechanischen Feststellbremse eine hohe Empfindlichkeit hinnehmbar, da hiermit leicht ein hoher Kennwert C* erreicht wird, welcher bei vorgegebener Maximal-Spannkraft ein relativ hohes Bremsmoment erzeugt.

Der Erfindung liegt die Aufgabe zugrunde, eine Trommelbremse zu schaffen, die bei hydraulischer Bremsbetätigung in Vorwärts-Fahrtrichtung ein relativ weiches Ansprechverhalten aufweist und bei einer mechanischen Bremsung ein hohes Bremsmoment erreicht. Auch soll die Trommelbremse einen einfachen Aufbau aufweisen und dementsprechend kostengünstig herstellbar sein.

Die erfindungsgemäße Lösung dieser Aufgabe ist im Patentanspruch 1 gekennzeichnet.

Vorteilhafte Ausgestaltungen der Erfindung sind in den Unteransprüchen beschrieben.

Da erfindungsgemäß bei einer normalen Bremsung in Vorwärtsfahrtrichtung keine der Bremsbacken auflaufend wirkt, zeigt die Bremse ein relativ weiches Ansprechverhalten (hat also im Sinne der vorstehenden Definitionen eine relativ geringe Empfindlichkeit), wobei aber der zweite Bremsbacken, an welchem der Hebel angelenkt ist, mit der doppelten Kraft des Radzylinders an die Trommel gedrückt wird, so daß insgesamt eine hinreichende Bremswirkung erzielt wird.

Die Empfindlichkeit der erfindungsgemäßen Bremse ist relativ gering. Bei einer Bremsung in Vorwärtsfahrtrichtung mit einem Bremsdruck von etwa 40 bar wird ein Kennwert von etwa 1,23 erreicht.

Bei einer Bremsung in Rückwärtsfahrtrichtung läuft der eine Bremsbacken auf und die selbstverstärkende Reibwirkung führt zu einem Kennwert von 3,0.

Bei einer Betätigung der mechanischen Bremse in Vorwärtsfahrtrichtung erzielt die erfindungsgemäße Bremse einen Kennwert von etwa 2,4, während in Rückwärtsfahrtrichtung mit der mechanischen Bremse ein Kennwert von etwa 2,5 erreicht wird.

Als weiterer Vorteil weist die erfindungsgemäße Bremse eine geringe Temperaturabhängigkeit auf. Die Änderung des Kennwertes im Temperaturbereich zwischen 0 und 300 °C ist nur etwa ± 13,8 %, wohingegen eine übliche Simplex-Bremse im gleichen Temperaturintervall Änderungen von ± 30 % aufweist.

Nachfolgend werden Ausführungsbeispiele der Erfindung anhand der Zeichnung näher erläutert. Es zeigt, bzw. zeigen :

Fig. 1 eine schematische Darstellung einer Trommelbremse ;

Fig. 2 ein anderes Ausführungsbeispiel einer Trommelbremse, und

Fig. 3 und 4 Horizontal-Schnitte durch Details aus Fig. 2.

Fig. 5 ein anderes Ausführungsbeispiel einer Trommelbremse.

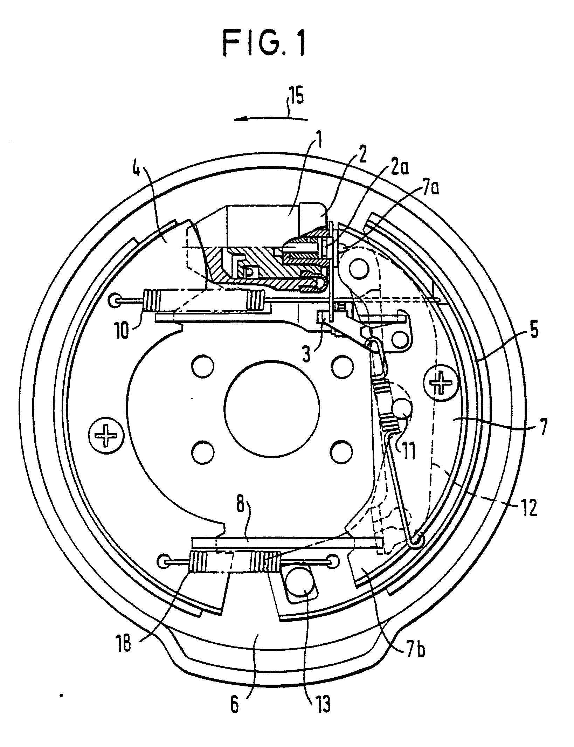

Gemäß Fig. 1 beaufschlagt ein Radzylinder 1 (Radbremszylinder) einer Trommelbremse (deren Trommel nicht gezeigt ist) zwei Bremsbacken 4 und 5. Der erste Bremsbacken 4 ist in bekannter Weise über eine Stift/Feder-Verbindung (nicht gezeigt) auf eine Ankerplatte 6 gedrückt. Zwischen den beiden Bremsbacken 4 und 5 wirkt eine bekannte Nachstellvorrichtung 3, um entsprechend der Abnutzung der Bremsbeläge der beiden Bremsbacken deren Abstand zu erhöhen. Die Vorwärtsrichtung wird durch den Pfeil 15 angezeigt.

Auf der zweiten Bremsbacke 5 ist ein Hebel 7 angelenkt. Der Kolben 2 des Radzylinders 1 beaufschlagt den Hebel 7, der seinerseits die Kolbenkraft über die Anlenkung auf den Bremsbacken 5 überträgt. Hierzu stößt ein Ende 7a des Hebels 7 gegen den Kolben 2 des Radzylinders 1. Das andere Ende 7b des Hebels 7 wirkt mit einer Druckstange 8 zusammen, welche gegen die Kraft einer Feder 10 die erste Bremsbacke 4 beaufschlagt.

Der Hebel 7 schwenkt um einen am zweiten Bremsbacken 5 befestigten Stift 11. Der Stift 11 überträgt auch die seitens des Radzylinder-Kolbens 2 und durch die Reaktion der Druckstange 8 auf den Hebel 7 übertragenen Kräfte. Durch die Reaktionskraft der Druckstange 8 wirkt auf den Hebel 7 insgesamt die zweifache Kraft des Kolbens 2 des Radzylinders 1.

Für die mechanische Betätigung der Bremse ist in herkömmlicher Weise ein Hand- oder Fußbremshebel 12 vorgesehen, welcher am Hebel 7 befestigt ist. Der Hand- oder Fußbremshebel 12 ist nicht das vom Fahrer direkt betätigte Bauteil, sondern dasjenige Bauteil, was direkt an der Bremse die mechanische Kraft umsetzt. Es sind mechanische Bremsen unterschiedlichster Art zusammen mit der Trommelbremse gemäß Fig. 1 einsetzbar, insbesondere Schwenkhebelanordnungen oder auch Zug-Bremsen. Zwischen den Bremsbacken 4, 5 wirkt der Feder 10 gegenüberliegend eine weitere Feder 18.

Bei Betätigung der Bremse wirkt der Kolben 2 des Radzylinders 1 auf das anliegende Ende 7a des Hebels 7, so daß der Hebel 7 um den Stift 11 schwenkt und am anderen Ende 7b die Druckstange 8 in Richtung auf den ersten Bremsbacken 4 drückt, welcher seinerseits gegen die Bremstrommel (nicht gezeigt) gedrückt wird. Die auf den Hebel 7 wirkenden Kräfte werden über den Stift 11 auf den zweiten Bremsbacken 5 übertragen, welcher ebenfalls in Eingriff mit der Bremstrommel gedrückt wird. Die Bremskräfte werden über den Bremsbacken 5 auf einen Anschlag 13 übertragen, der an der Ankerplatte 6 befestigt ist. Der Bremsbacken 4 wirkt als ablaufender Bremsbacken, während der Bremsbacken 5 ähnlich wirkt wie ein Scheiben-Bremsbacken, auf welchen die zweifache Betätigungskraft wirkt. Der bei einer Bremsung in Vorwärtsrichtung erzielte Bremsfaktor beträgt bei 40 bar etwa 1,23.

Bei einer Bremsung in Rückwärtsfahrtrichtung wirkt der erste Bremsbacken 4 auflaufend, selbstverstärkend und weist einen Bremsfaktor von 3,0 auf.

Auch bei einer mechanischen Bremsung werden relativ hohe Bremsfaktoren erzielt : Wird die mechanische Bremse, z. B. die Handbremse, betätigt, so wird bei einer Vorwärtsbewegung der Bremsbacken 4 in herkömmlicher Weise über die Druckstange der Nachstellvorrichtung 3 an die Trommel gedrückt, während der zweite Bremsbacken 5 über den Hebel 7 und die Druckstange 8 gegen die Trommel gedrückt wird. Der hiermit erzielte Bremsfaktor beträgt 2,4. Bei einer Bewegung in Rückwärtsfahrtrichtung wurde ein Bremsfaktor von 2,5 gemessen.

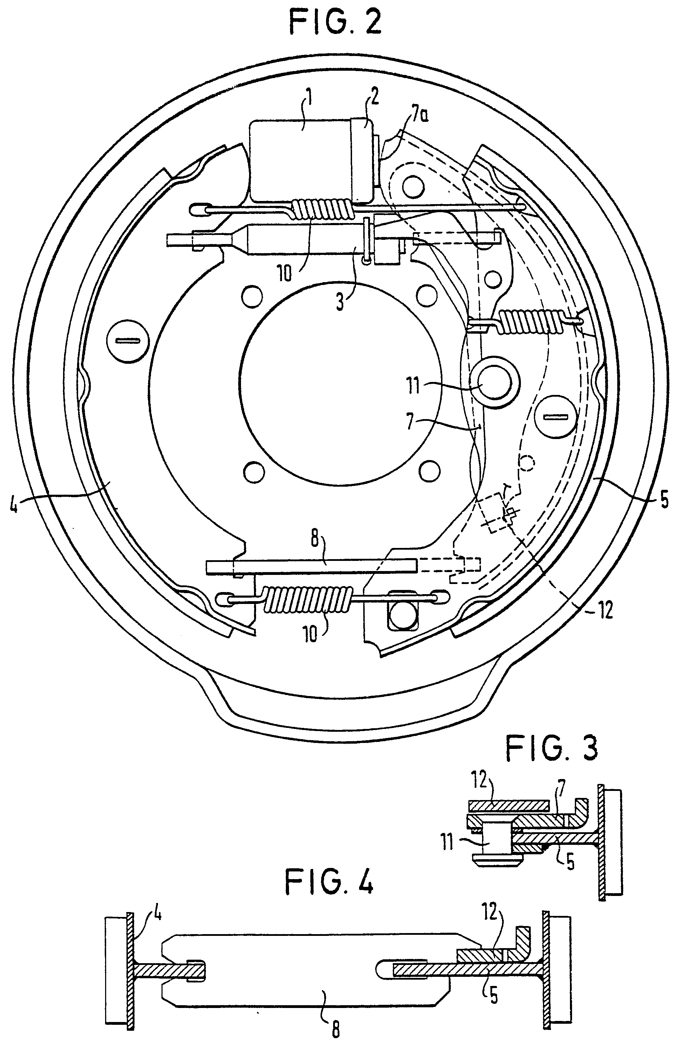

Die Fig. 2, 3 und 4 zeigen ein weiteres Ausführungsbeispiel, welches dem Ausführungsbeispiel gemäß Fig. 1 bis auf die Nachstelleinrichtung 3 entspricht, welche hier ohne lastabhängige Sperre ausgebildet ist. Fig. 3 zeigt einen Detail-Schnitt aus Fig. 2 in Höhe des Stiftes 11. Der Hebel 7 ist mittels des Stiftes 11 drehbar auf dem Bremsbacken 5 gelagert, während andererseits der Hand- oder Fußbremshebel 12 mit dem Hebel 7 verbunden ist.

Fig. 4 zeigt einen Horizontal-Schnitt in Höhe der Druckstange 8, auf welche außer dem Hebel 7 auch der Hand- oder Fußbremshebel 12 einwirkt.

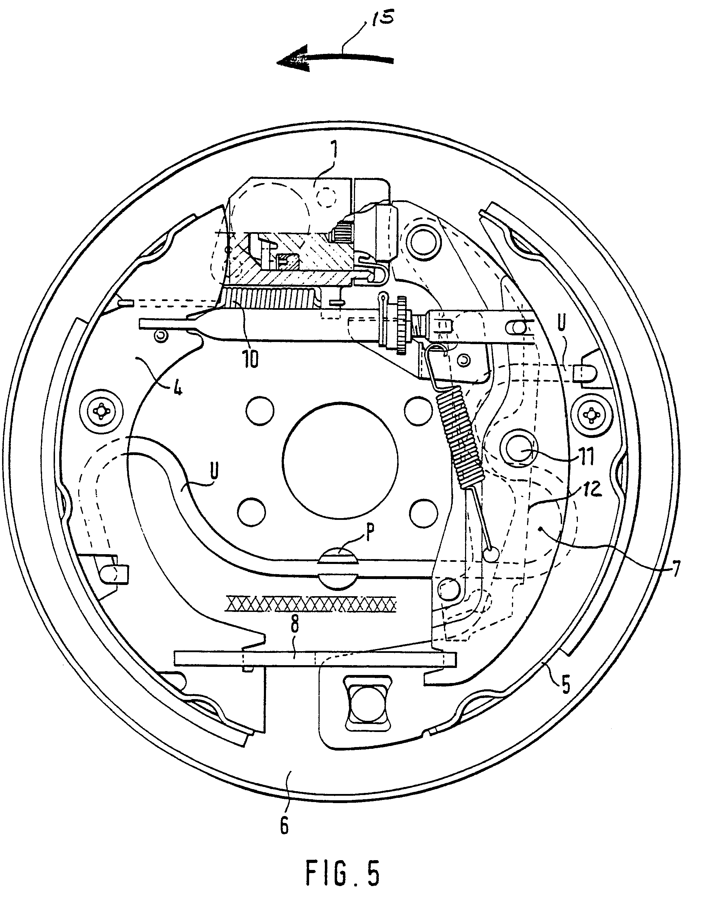

Fig. 5 zeigt ein weiteres Ausführungsbeispiel einer Trommelbremse gemäß der Erfindung. Diejenigen Bauteile, welche dem zuvor beschriebenen Ausführungsbeispiel entsprechen, sind mit gleichen Bezugszeichen versehen. Das Ausführungsbeispiel gemäß Fig. 5 unterscheidet sich vom Ausführungsbeispiel gemäß Fig. 2 dadurch, daß zusätzlich die U-förmige Feder U vorgesehen ist, welche die Bremsbacken 4, 5 nach innen drückt, so daß diese sicher von der Trommel entfernt werden. Die U-förmige Feder U ist mittels eines Montagekörpers P an der Bremse befestigt. Der Montagekörper P besteht aus Kunststoff.

Weiterhin unterscheidet sich das Ausführungsbeispiel gemäß Fig. 5 vom Ausführungsbeispiel gemäß Fig. 2 darin, daß der Stift 11 vollständig vom Hebel 7 umfaßt wird, d. h. der Stift 11 bildet ein vollständiges Dreh-Lager für den Hebel 7. Die U-förmige Feder U steht mit den Bremsbacken 4, 5 an etwa diametral gegenüber liegenden Punkten in Eingriff, so daß die Verbindungslinie zwischen den zwei Angriffspunkten der Kraft zumindest annähernd durch das Zentrum der Bremse verläuft.

## Patentansprüche

1. Trommelbremse mit zumindest einem ersten und einem zweiten Bremsbacken (4, 5), die hydraulisch mittels zumindest eines Radzylinders (1) und/oder mechanisch betätigbar sind, wobei an dem zweiten Bremsbacken (5) ein Hebel (7) angelenkt ist, dessen einer Arm vom Kolben (2) des Radzylinders (1) beaufschlagt wird und dessen anderer Arm direkt oder indirekt auf den ersten Bremsbacken (4) einwirkt, dadurch gekennzeichnet, daß der erste Bremsbacken (4) in Rückwärtsfahrtrichtung auflaufend gelagert ist und daß bei einer Bremsung in Vorwärtsfahrtrichtung keiner der Bremsbacken (4, 5) auflaufend selbstverstärkend gelagert ist.

2. Trommelbremse nach Anspruch 1, dadurch gekennzeichnet, daß der Hebel (7) zweiseitig ist und mittels eines Stiftes (11) an dem zweiten Bremsbacken (5) angelenkt ist und daß der Stift (11) zumindest annähernd symmetrisch in bezug auf den zweiten Bremsbacken (5) angeordnet ist.

3. Trommelbremse nach einem der Ansprüche 1 oder 2, dadurch gekennzeichnet, daß der Hebel (7) mittels einer Druckstange (8) auf das dem Radzylinder (1) gegenüberliegende Ende des ersten Bremsbackens (4) wirkt.

4. Trommelbremse nach einem der vorhergehenden Ansprüche, dadurch gekennzeichnet, daß die wirksamen Arme des Hebels (7) im Verhältnis 1 : 1 stehen.

5. Trommelbremse nach einem der vorhergehenden Ansprüche, dadurch gekennzeichnet, daß eine Nachstellvorrichtung (3) vorgesehen ist mit einem eine Übernachstellung bei starker Bremsbetätigung verhindernden Sperrteil (2a), welches zwischem dem Kolben (2) des Radzylinders (1) und einem Arm des Hebels (7) angeordnet ist.

6. Trommelbremse nach einem der vorhergehenden Ansprüche, dadurch gekennzeichnet, daß ein Hand- oder Fußbremshebel (12) einer mechanischen Bremsbetätigungsvorrichtung, wie einer Handbremse, am Hebel (7) angelenkt ist und direkt oder indirekt auf den ersten Bremsbacken (4) wirkt.

7. Trommelbremse nach den Ansprüchen 3 und 6, dadurch gekennzeichnet, daß der Hand- oder Fußbremshebel (12) über die Druckstange (8) auf den ersten, in Rückwärtsfahrtrichtung auflaufenden Bremsbacken (4) einwirkt.

8. Trommelbremse nach einem der Ansprüche 3 bis 7, dadurch gekennzeichnet, daß die wirksame Länge der Druckstange (8) nachstellbar ist.

9. Trommelbremse nach Anspruch 1, dadurch gekennzeichnet, daß eine U-förmige Feder U vorgesehen ist, welche die Bremsbacken (4, 5) nach innen drückt.

## Claims

1. A drum brake including at least a first brake shoe and a second brake shoe (4, 5) which are adapted to be pressurized hydraulically by at least one wheel brake cylinder (1) and/or mechanically, a lever (7) being pivoted at the second brake shoe (5) and having its one arm pressurized by the piston (2) of the wheel brake cylinder (1) and its other arm acting directly or indirectly on the first brake shoe (4), characterized in that the first brake shoe (4) is supported leadingly in backward travelling direction, and in that upon braking in forward travelling direction none of the brake shoes (4, 5) is supported leadingly and self-boosting.

2. The drum brake as claimed in claim 1, characterized in that the lever (7) is two-sided and pivoted at the second brake shoe (5) by a pin (11), and in that the pin (11) is arranged at least approximately symmetrically with respect to the second brake shoe (5).

3. The drum brake as claimed in one of claims 1 or 2, characterized in that the lever (7) acts by a pressure rod (8) on the end opposite the wheel brake cylinder (1) of the first brake shoe (4).

4. The drum brake as claimed in one of the preceding claims, characterized in that the ratio of the effective arms of the lever (7) with respect to each other is 1 : 1.

5. The drum brake as claimed in one of the preceding claims, characterized in that an adjusting device (3) is provided which comprises a locking member (2a) preventing excessive adjustment upon strong actuation of the brake and being arranged between the piston (2) of the wheel brake cylinder (1) and one arm of the lever (7).

6. The drum brake as claimed in one of the preceding claims, characterized in that a hand or foot brake lever (12) of a mechanical brake actuator, such as a hand brake, is pivoted at the lever (7) and acts directly or indirectly on the first brake shoe (4).

7. The drum brake as claimed in claims 3 and 6, characterized in that the hand or foot brake lever (12) acts through the pressure rod (8) on the first brake shoe (4) which is leading in backward travelling direction.

8. The drum brake as claimed in one of claims 3 to 7, characterized in that the effective length of the pressure rod (8) is adjustable.

9. The drum brake as claimed in claim 1, characterized in that a U-shaped spring U is provided which urges the brake shoes (4, 5) in inward direction.

## Revendications

1. Frein à tambour comprenant au moins une première et une deuxième mâchoires de frein (4, 5) qui peuvent être actionnées hydrauliquement au moyen d'un cylindre de roue (1) et/ou mécaniquement, dans lequel est prévu un levier (7) articulé sur la deuxième mâchoire (5) du frein, dont un bras est attaqué par le piston (2) du cylindre de roue (1) et dont l'autre bras agit directement ou indirectement sur la première mâchoire (4) du frein, caractérisé en ce que la première mâchoire (4) du frein est tourillonnée de façon à être comprimée dans le sens de la marche arrière du véhicule et en ce que, lors d'un freinage dans le sens de la marche avant, aucune des mâchoires (4, 5) du frein n'est tourillonnée de façon à être comprimée et à être autoserrante.

2. Frein à tambour selon la revendication 1, caractérisé en ce que le levier (7) est à deux bras et est articulé sur la deuxième mâchoire (5) du frein au moyen d'une broche (11), et en ce que la broche (11) est disposée au moins à peu près symétriquement par rapport à la deuxième mâchoire (5) du frein.

3. Frein 3 tambour selon une des revendications 1 et 2, caractérisé en ce que le levier (7) agit au moyen d'une bielle de poussée sur l'extrémité de la première mâchoire du frein qui est à l'opposé du cylindre de roue (1).

4. Frein à tambour selon une des revendications précédentes, caractérisé en ce que les bras effectifs du levier (7) sont dans un rapport de 1 : 1.

5. Frein à tambour selon une des revendications précédentes, caractérisé en ce qu'il est prévu un dispositif de rattrapage (3) comprenant un élément de verrouillage (2a) qui évite un rattrapage excessif dans le cas d'un fort actionnement des freins et qui est disposé entre le piston (2) du cylindre de roue (1) et un bras du levier (7).

6. Frein à tambour selon une des revendications précédentes, caractérisé en ce qu'un levier de frein à main ou à pied (12) qui fait partie d'un dispositif d'actionnement mécanique du frein, tel qu'un frein à main, est articulé sur le levier (7) et agit directement ou indirectement sur la première mâchoire (4) du frein.

7. Frein à tambour selon les revendications 3 et 6, caractérisé en ce que le levier de frein à main ou à pied (12) agit par l'intermédiaire de la bielle de poussée (8) sur la première mâchoire (4) du frein, qui est comprimée dans le sens de la marche arrière.

8. Frein à tambour selon une des revendications 3 à 7, caractérisé en ce que la longueur effective de la bielle de poussée (8) est réglable.

9. Frein à tambour selon la revendication 1, caractérisé en ce qu'il est prévu un ressort en U (U) qui attire les mâchoires (4, 5) du frein vers l'intérieur.

EP 0 216 277 B1

# FIG. 1

# FIG. 2

# FIG. 3

# FIG. 4

FIG.5